Europäisches Patentamt

European Patent Office

Office européen des brevets

(19)

(11) Veröffentlichungsnummer: **0 215 732
B1**

(12) **EUROPÄISCHE PATENTSCHRIFT**

(45) Veröffentlichungstag der Patentschrift:
**20.12.89**

(51) Int. Cl.⁴: **A22C 15/00**

(21) Anmeldenummer: **86810309.4**

(22) Anmeldetag: **11.07.86**

(54) **Anordnung von Wurstaufhängeschlaufen.**

(30) Priorität: **19.09.85  CH 4074/85**

(43) Veröffentlichungstag der Anmeldung:
**25.03.87 Patentblatt 87/13**

(45) Bekanntmachung des Hinweises auf die Patenterteilung:
**20.12.89 Patentblatt 89/51**

(84) Benannte Vertragsstaaten:
**AT DE FR IT**

(56) Entgegenhaltungen:
**EP-A- 0 144 947
DE-A- 3 147 386
DE-U- 8 510 076**

(73) Patentinhaber: **Hoegger Alpina AG, Ringstrasse,
CH-9202 Gossau(CH)**

(72) Erfinder: **Sbalzarini, Lino, Fuchsbüelstrasse 5,
CH-9030 Abtwil(CH)**

(74) Vertreter: **Monsch, René et al, E. BLUM & CO.,
Patentanwälte Vorderberg 11, CH-8044 Zürich(CH)**

**Beschreibung**

Die vorliegende Erfindung betrifft eine Anordnung von Wurstaufhängeschlaufen gemäss dem Oberbegriff des unabhängigen Patentanspruchs 1.

Bei einer bekannten Anordnung dieser Art (DE-A 23 52 000) sind die Wurstaufhängeschlaufen im Abstand nebeneinander an einem das Band bildenden Gurt an ihren ebenfalls Abstand zueinander aufweisenden, etwa parallelen Seiten befestigt, so dass zu beiden Seiten des Gurtes offene Teilschlaufen überstehen, wobei vorzugsweise die Schlaufen auf dem Gurt mittels zweier miteinander verklebter Streifen aus Papier, Kunststoff oder Textilmaterial befestigt sind, d.h. diese beiden Streifen, zwischen denen die Schlaufen befestigt sind, bilden den Gurt. Bei der Vereinzelung der Schlaufen an der Verarbeitungsstelle beim Anklippen an die Würste bleiben deshalb abgeschnittene Teile des Gurts an den Schlaufen zurück, was nicht nur das äussere Bild beeinträchtigt, sondern auch das Aufhängen der Würste hindert. Ausserdem muss der Gurt sehr sorgfältig und mit genau übereinanderliegenden Lagen gewickelt sein, wodurch der Wickel sehr schnell auf einen grossen Durchmesser anwächst mit der Folge, dass die aufspulbare Gurtlänge begrenzt ist und der Wickel bei der Verarbeitung entsprechend schnell verbraucht ist.

Gemäss einem weiteren Vorschlag in der DE-A 31 47 386 sollen die aus Garn geknoteten Schlaufen in geöffnetem Zustand mit dem Knoten an in Reihe liegenden Stellen, sich schuppenartig überlappend auf einem Trägerband befestigt sein. Damit wird der Nachteil der älteren Ausführungsform, wonach beidseits des Trägerbandes Schlaufen überstehen und sich deshalb leicht ineinander verhaken können, behoben. Es bleibt in Form des Trägerbandes ein wesentlicher Nachteil bestehen. Einerseits verteuert das Trägerband den fertigen Wickel und beim Wurstverschliessautomat bildet sich ein Abfall der beseitigt werden muss und anderseits kann die Herstellung solcher Wickel nicht unbeaufsichtigt geschehen, weil der Trägerbandvorrat laufend zu ergänzen ist.

Es ist deshalb eine Aufgabe der Erfindung eine Anordnung der eingangs beschriebenen Art zu schaffen, bei der sich die Schlaufen nicht verhaken können, sich reihenförmig magazinieren lassen und bei dem Wurstverschliessautomaten keinen Abfall ergeben.

Erfindungsgemäss wird dies durch die Merkmale im kennzeichnenden Teil des unabhängigen Patentanspruchs 1 und durch die Merkmale der besonderen Ausführungsformen der abhängigen Ansprüche 2–7 erreicht.

Ausführungsbeispiele der Erfindung werden nachfolgend anhand der Zeichnung erläutert. Es zeigen:

Fig. 1 eine Draufsicht auf eine erste Ausführungsform der Reihe von Wurstaufhängeschlaufen,

Fig. 2 eine Draufsicht auf eine zweite Ausführungsform einer solchen Reihe, und

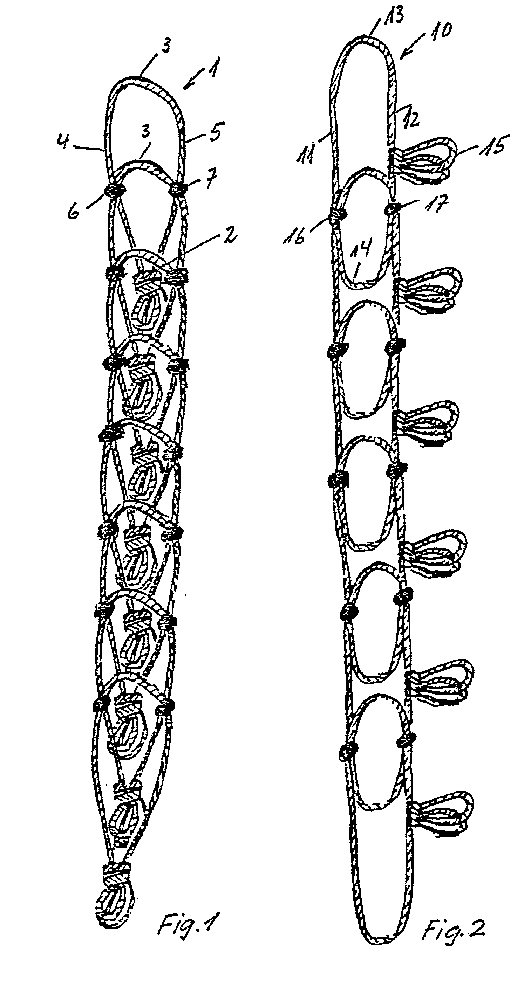

Gemäss der ersten Ausführungsform nach Fig. 1 sind die aus einem Abschnitt eines Faserstranges oder Garns durch Verknoten der Enden gebildeten Wurstaufhängeschlaufen in gestreckte Form gebracht, wobei die dem Knoten 2 gegenüberliegende Bogenpartie 3 des Schlaufenringes 1 gerundet ist. Diese in identischer Form vorliegenden Schlaufenringe sind sich schuppenartig überlappend zu einer Reihe geordnet, derart, dass jeweils die Bogenpartie 3 über den beiden sich im Knoten 2 vereinigenden Schenkeln 4, 5 liegt.

Die Schlaufenringe 1 können gemäss Fig. 1 so angeordnet sein, dass die Bogenpartie 3 die Schenkel 4, 5 kreuzt, oder, wie leicht einzusehen ist, könnten die Bogenpartien 3 mit sehr geringem Abstand angeordnet sein, so dass die Schenkel 4, 5 von sich folgenden Schlaufenringen 1 wenigstens angenähert parallel und sich teilweise sogar überdeckend zueinander angeordnet wären.

In dem in Fig. 1 dargestellten Fall sind Haftstellen 6, 7 an den Kreuzungspunkten angebracht, so dass eine endlose Reihe fest zusammenhängender Schlaufenringe 1 gebildet ist. Diese Haftstellen 6, 7 können Leimpunkte oder Tropfen von Hotmelt sein. In beiden Fällen entsteht eine Verbindung mit relativ hoher Zugfestigkeit in der Ebene der aufgereihten Schlaufenringe 1 und mit einer weit geringeren Zugfestigkeit in senkrechter Richtung dazu.

Eine zweite Anordnung ist in Fig. 2 dargestellt. Hier sind die einzelnen Schlaufenringe 10 einzeln geformt, so dass sich zwei parallele oder leicht konvergierende oder leicht divergierende gerade Strecken 11, 12 bilden, die beidseits durch kreisbogenförmige Partien 13, 14 verbunden sind. In Fig. 2 sind diese kreisbogenförmigen Partien 13, 14 mit gleichen Radien angegeben. Wie jedoch leicht verständlich ist, könnten die Partien 13, 14 ebensogut unterschiedliche Radien haben. Die Knoten 15 befinden sich etwa mittig in der einen geraden Strecke 15. Aber auch hier bildet diese Anordnung keine starre Regel, indem der Knoten auch einseitig näher bei einer der Partien 13, 14 liegen könnte. Wichtig ist nur, dass der Knoten immer an derselben Stelle liegt und höchstens um einem geringen Abstand von einer einmal festgelegten Stelle abweicht.

An den Kreuzungsstellen zwischen zwei sich folgenden Schlaufenringen 10 ist auch hier eine Haftstelle 16, 17 vorhanden. Diese Haftstellen 16, 17 können ebenso wie im vorbeschriebenen Beispiel auch wieder ein Leim- oder ein Hotmelt-Fleck sein.

Solcherart ausgebildete Reihen von Schlaufenringen 1, 10 können endlos gefertigt werden, weil kein Trägerband mit endlicher Länge verwendet wird. Daher könnten Automaten 24 Stunden pro Tag arbeiten bis der Garnhaspel aufgebraucht ist. Die Haftstellen 6, 7 und 16, 17 können gespritzt werden, und bei Verwendung von Hotmelt ist offensichtlich, dass gegenüber einer Befestigung auf einem Band ganz wesentliche Einsparungen erzielt werden können, weil der Arbeitsgang für das Beschichten des Bandes mit Klebstoff und der Aufwand für das Band selbst entfällt.

Für die Vereinzelung der Schlaufenringe bieten sich mehrere Verfahren an. So könnten diese beispielsweise bei Verwendung von Hotmelt durch

Wiedererwärmen der Klebstelle gelöst werden. Aber bei Leim und Hotmelt liesse sich das Lösen durch Pressen zwischen zwei Walzen bewerkstelligen, indem beide Verbindungsarten unelastisch sind und bei einer starken Pressung vollständig zerfallen. Bei Verwendung eines elastischen Stoffes für die Verbindung ist eine Trennung durch Schneiden möglich.

**Patentansprüche**

1. Anordnung von sich in einer Reihe schuppenartig überlappender Wurstaufhängeschlaufen, welche je aus einem Abschnitt eines Faserstranges bestehen und zu Schlaufenringen geknüpft sind, für die Magazinierung und für die Zuführung zu einem Wurstverschlussautomaten, dadurch gekennzeichnet, dass sich überlappende Schlaufenringteile (3, 4, 5, 11, 12, 13, 14) benachbarter Schlaufenringe (1, 10) zugfest miteinander verbunden sind.

2. Anordnung nach Patentanspruch 1, dadurch gekennzeichnet, dass die Schlaufenringe (1) mit in der Längsachse der sich überlappenden Schlaufenringreihe befindlichen Knoten (2) angeordnet sind und an wenigstens je einer Stelle der beiden wenigstens angenähert parallel zueinander verlaufenden Strangpartien (4, 5) von sich folgenden Schlaufenringen (1) miteinander verbunden sind.

3. Anordnung nach Patentanspruch 1, dadurch gekennzeichnet, dass die Schlaufenringe (1) mit in der Längsachse der sich überlappenden Schlaufenringreihe befindlichen Knoten (2) angeordnet sind un an sich kreuzenden Strangpartien von sich folgenden Schlaufenringen miteinander verbunden sind.

4. Anordnung nach Patentanspruch 1, dadurch gekennzeichnet, dass die Schlaufenringe (10) parallel zur Längsachse der sich überlappenden Schlaufenringreihe ausgerichtete gerade Strangpartien (11, 12) und zwei mit wenigstens angenähert gleichen Radien gebildete kreisabschnittsförmige Strangpartien (13, 14) sowie mit Bezug auf die Längsachse seitlich abstehende Knoten (15) aufweisen und dass die Schlaufen an den sich wenigstens angenähert überdeckenden geraden Strangpartien (11, 12) miteinander verbunden sind.

5. Anordnung nach einem der Patentansprüche 1 bis 4, dadurch gekennzeichnet, dass die Verbindung zwischen den sich überlappenden einzelnen Schlaufen durch einen Hotmelt gebildet ist.

6. Anordnung nach einem der Patentansprüche 1 bis 4, dadurch gekennzeichnet, dass die Verbindung zwischen den sich überlappenden einzelnen Schlaufen durch einen Klebstoff gebildet ist.

7. Anordnung nach Patentanspruch 5, dadurch gekennzeichnet, dass ein Hotmelt vorgesehen ist, der nach dem Erstarren auf Druckkräfte empfindlich ist.

**Claims**

1. Arrangement of a row of scale-like overlapping sausage hanging loops for storing in a magazine and feeding to a sausage closing machine, each loop consisting of a cord section tied together to form a loop ring, characterized in that overlapping loop ring parts (3, 4, 5, 11, 12, 13, 14) of adjacent loop rings (1, 10) are connected to each other in a pulling force transmitting manner.

2. Arrangement according to claim 1, characterized in that said loop rings (1) are arranged with their knots (2) in the longitudinal axis of said overlapping loop ring row, and that consecutive loop rings (1) are connected with each other at at least one point on each of the two cord section s(4, 5) running at least approximately parallel to each other.

3. Arrangement according to claim 1, characterized in that said loop rings (1) are arranged with their knots (2) in the longitudinal axis of said overlapping loop ring row, and are connected with each other at crossing cord sections of consecutive loop rings.

4. Arrangement according to claim 1, characterized in that said loop rings (10) comprise straight cord sections (11, 12) aligned parallel to said longitudinal axis of said overlapping loop ring row, two circular arc cord sections (13, 14) of at least approximately the same radius, and knots (15) extending laterally compared to said longitudinal axis, and that said loops are connected with each other on said at least approximately overlapping straight cord sections (11, 12).

5. Arrangement according to one of claims 1 to 4, characterized in that said connection between said individual, overlapping loops is provided by a hot melt.

6. Arrangement according to one of claims 1 to 4, characterized in that said connection between said individual, overlapping loops is provided by an adhesive.

7. Arrangement according to claim 5, characterized in that a hot melt is provided for, which after solidification is sensitive to pressure forces.

**Revendications**

1. Ensemble de boucles de suspension pour saucisses, destiné à être emmagasiné et à alimenter un automate pour sceller des saucisses, chaque boucle étant formée d'un segment fibreux noué en anneau, et les boucles étant alignées et se recouvrant partiellement à la façon d'écailles, caractérisé en ce que les parties superposées (3, 4, 5, 11, 12, 13, 14) des anneaux voisins (1, 10) sont réunies par des fixations résistant à la traction.

2. Ensemble selon la revendication 1, caractérisé en ce que les anneaux (1) sont agencés avec leurs nœuds (2) placés dans l'axe longitudinal de l'alignement des anneaux se recouvrant partiellement, et sont réunis en au moins un endroit de chacune des deux portions au moins approximativement parallèles (4, 5) de deux anneaux successifs.

3. Ensemble selon la revendication 1, caractérisé en ce que les anneaux (1) sont agencés avec leurs nœuds (2) placés dans l'axe longitudinal de l'alignement des anneaux se recouvrant partiellement, et sont réunis en des points de croisement d'anneaux successifs.

4. Ensemble selon la revendication 1, caractérisé en ce que les anneaux (10) présentent des portions rectilignes (11, 12) parallèles à l'axe longitudinal de l'alignement des anneaux se recouvrant partiellement, deux portions (13, 14) en forme d'arcs de cercle ayant des rayons au moins approximativement égaux, ainsi que des nœuds (15) placés latéralement par rapport à l'axe longitudinal, et en ce que les boucles sont réunies l'une à l'autre à l'endroit où des portions rectilignes (11, 12) se recouvrent au moins partiellement.

5. Ensemble selon l'une des revendications 1 à 4, caractérisé en ce que les fixations réunissant les boucles se recouvrant partiellement sont formées par une fusion à chaud.

6. Ensemble selon l'une des revendications 1 à 4, caractérisé en ce que les fixations réunissant les boucles se recouvrant partiellement sont formées par un adhésif.

7. Ensemble selon la revendication 5, caractérisé en ce que les fixations par fusion à chaud sont formées de façon à être sensibles à des forces de compression après leur solidification.

EP 0 215 732 B1

Fig.1

Fig.2